(19) Europäisches Patentamt
European Patent Office
Office européen des brevets

(11) **EP 1 357 767 A1**

(12) **EUROPEAN PATENT APPLICATION**

(43) Date of publication:
**29.10.2003 Bulletin 2003/44**

(51) Int Cl.7: **H04Q 7/38**

(21) Application number: **02252829.3**

(22) Date of filing: **23.04.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Cao, Qiang**
  **Swindon, Wiltshire SN2 3XL (GB)**

• **Charriere, Patrick**
  **Tetbury, Gloucestershire GL8 8DR (GB)**
• **Lim, Seau Sian**
  **Swindon, Wiltshire SN1 3JJ (GB)**
• **Sapiano, Philip Charles**
  **Corsham, Wiltshire SN13 9AY (GB)**

(74) Representative: **Sarup, David Alexander et al**
**Lucent Technologies NS UK Limted,**
**5 Mornington Road**
**Woodford Green, Essex IG8 OTU (GB)**

(54) **A radio telecommunications network, a method of transmitting data blocks, and a radio telecommunications base station**

(57)    A radio telecommunications network comprises a base station and a plurality of mobile user terminals. The base station in use stores data blocks intended for transmission to respective user terminals, selects which data block is next for transmission, and transmits each data block over a channel shared by the user terminals to the respective user terminal. The selection is made dependent upon estimates of the required transmit power to the respective user terminals.

### Fig. 5

## Description

### Technical Field

The present invention relates to a radio telecommunications network. The present invention also relates to a method of transmitting data blocks in radio telecommunications network The present invention also relates to a radio telecommunications base station.

### Background of the Invention

In UMTS, the Downlink Shared Channel (DSCH) is a downlink common channel that is used as a supplementary channel for the transmission of data towards a mobile user terminal in addition to the dedicated channel.

The purpose of the downlink shared channel DSCH is to minimize the use of the downlink channelization code resource (which is very limited on the downlink) by sharing this resource between different user terminals belonging to a pool of downlink shared channel DSCH user terminals. A scheduling algorithm is in charge of controlling which downlink shared channel DSCH user terminal is granted the downlink shared channel DSCH resource and for how long.

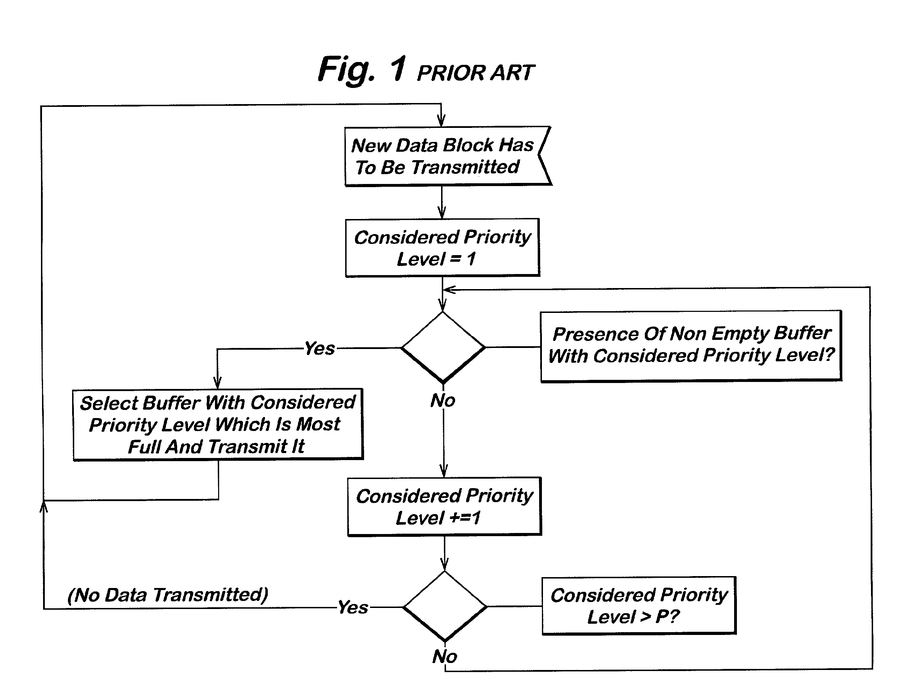

As shown in Figure 1, a known method of scheduling is to use the information on the quantity of data waiting for transmission for every user terminal in the pool and the relative priority of different user terminals.

### Summary of the Invention

The present invention provides a radio telecommunications network comprising a base station and a plurality of mobile user terminals, the base station in use storing data blocks intended for transmission to respective user terminals, selecting which data block is next for transmission, and transmitting each data block over a channel shared by the user terminals to the respective user terminal characterised in that the selection is made dependent upon estimates of the required transmit power to the respective user terminals.

Preferred embodiments thus involve use of predicted downlink transmit level as one of the input of the scheduling algorithm controlling a downlink common channel One advantage is that account is taken of how much power needs to be used for the transmission of the data over the radio interface, consequently data to terminals requiring a lower level of transmit power to be reached are selected for downlink shared channel DSCH usage, leading to a lower level of radio interference, which in turns leads to better use of a downlink cell capacity. downlink shared channel DSCH power is considered as the power of the dedicated channel to a terminal plus an offset.

Preferred embodiments thus provide a mechanism for the scheduling of packet data over the UMTS downlink shared channel (DSCH). Specifically, information on predicted downlink transmit power level is used as one of the factors of the scheduling algorithm. This enables improved efficiency of transmission over the radio channel and thereby increases the radio network air interface capacity.

In overload situations, terminals that require less transmit power to them are favoured for the downlink shared channel DSCH transmission thereto. This minimizes the transmit power level used by the downlink shared channel DSCH, hence minimizes the subsequent interference level for the neighbouring cells thereby maximizing the downlink radio capacity.

Preferably each estimate depends upon the transmit power to the associated user terminal over an associated dedicated channel. Preferably the lower the estimate of required transmit power is the more likely is data to that user terminal to be selected. Preferred embodiments thus involve use of the measured downlink power on the dedicated channel to make an estimate of the transmit power on a downlink common channel.

Preferably the selection is made also dependent upon the amount of data stored for transmission to the respective user terminal.

Preferably the user terminals each have a selected one of a plurality of different priority levels, and the selection is made also dependent upon the level of priority accorded to the respective user terminal.

Preferably the radio telecommunications network is a Universal Mobile Telecommunications System UMTS telecommunications network, the base station comprising a base transceiver station and radio network controller RNC. In preferred embodiments is thus provided scheduling of UMTS packet data transmission over a shared channel based on transmit power level. Preferably the channel shared by the user channels is a downlink shared channel DSCH. Preferably the base transceiver station is operative to send information to the radio network controller in a field of a dataframe, the information comprising an indication of transmit power level to the associated user terminal over an associated dedicated channel, the field being dedicated to that information. This preferred format of the message reporting the power level minimizes the signalling load.

The present invention also provides a method of transmitting data blocks in radio telecommunications network comprising a base station and a plurality of mobile user terminals, the base station storing data blocks intended for transmission to respective user terminals, selecting which data block is next for transmission, and transmitting each data block over a channel shared by the user terminals to the respective user terminal <u>characterised by</u> the selection being made dependent upon estimates of the required transmit power to the respective user terminal. The base station preferably comprises a base transceiver station and an associated radio network controller.

The present invention also provides a radio telecommunications base station operative in use to communicate with a plurality of mobile user terminals, the base station in use storing data blocks intended for transmission to respective user terminals, selecting which data block is next for transmission, and transmitting each data block over a channel shared by the user terminals to the respective user terminal <u>characterised in that</u> the selection is made dependent upon estimates of the required transmit power to the respective user terminals. The base station preferably comprises a base transceiver station and an associated radio network controller.

**Brief Description of the Drawings**

A preferred embodiment of the present invention will now be described by way of example and with reference to the drawings, in which:

Figure 1 is a diagram illustrating a known downlink shared channel DSCH scheduling mechanism,
Figure 2 is a diagram illustrating a UMTS telecommunications network,
Figure 3 is a diagram illustrating a new frame format derived from the known format specified in UMTS Technical Specification 25.427,
Figure 4 is a diagram illustrating a preferred downlink shared channel DSCH scheduling mechanism, and
Figure 5 is a diagram illustrating an alternative preferred downlink shared channel DSCH scheduling mechanism.

**Detailed Description**

The downlink shared channel DSCH transmit power is predicted as a function of the transmit power used to reach the terminal with the downlink dedicated channel. This is possible because irrespective of whether or not any data is scheduled to be sent to them on the downlink shared channel DSCH, every user terminal in the group of user terminals sharing a downlink shared channel DSCH (the group being known as "the DSCH pool") has a dedicated channel which is active.

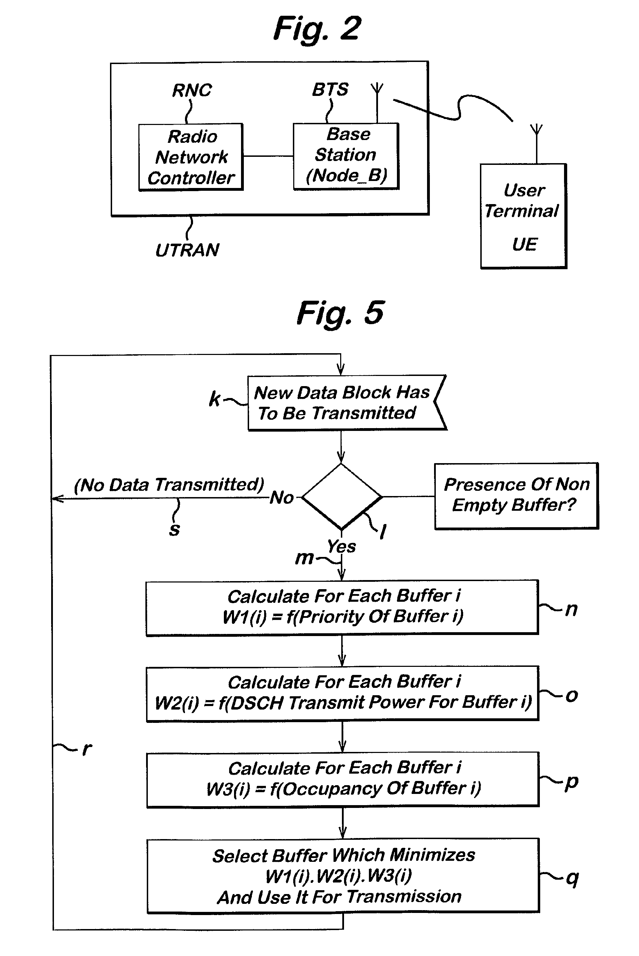

As shown in Figure 2, a preferred UMTS radio access network UTRAN consists of a radio network controller RNC which controls the operation of several base transceiver stations (base tranceiver stations BTS, denoted NodeB in UMTS terminology, and one of which is shown in Figure 2 for simplicity). A base transceiver station communicates with a mobile user terminal (user equipment UE) during a call connection to that user terminal.

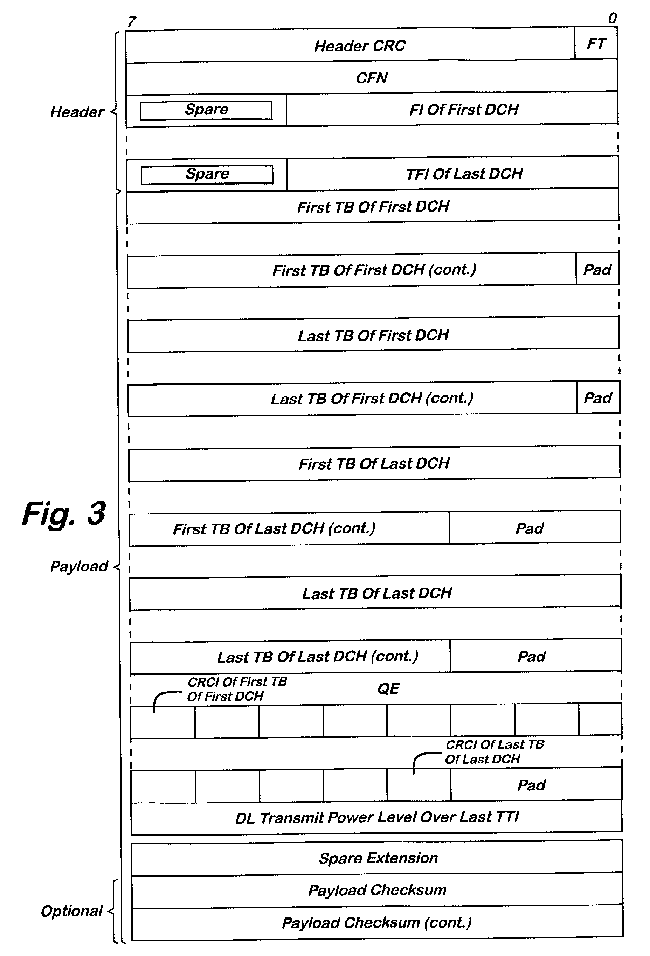

For every user terminal of the DSCH pool, a base transceiver station BTS sends to a downlink shared channel DSCH scheduler in its controlling radio network controller RNC an indication of the downlink transmit power level used for reaching the terminal over the downlink dedicated channel DCH. As the scheduler is located in the radio network controller RNC, an efficient way to report the values is to use a modified form of the data frame being used from the base transceiver station BTS to the radio network controller RNC in UMTS. The format of this modified frame is shown in Figure 3. As shown in Figure 3, a field "DL transmit power over last TTI" is included denoting the dedicated channel downlink transmit power over the last transmission time interval. Alternatively this data could be carried in the spare extension instead.

The downlink transmit power information is used to make an estimate of the transmit power that will be needed to reach a user terminal with the downlink shared channel DSCH. As an example, the estimate is calculated as follows:

$$P(DSCH) = \text{latest DL transmit power level reported} + \text{offset.}$$

The scheduling algorithm takes account of the estimated transmit power in deciding of which user gets granted the downlink shared channel DSCH

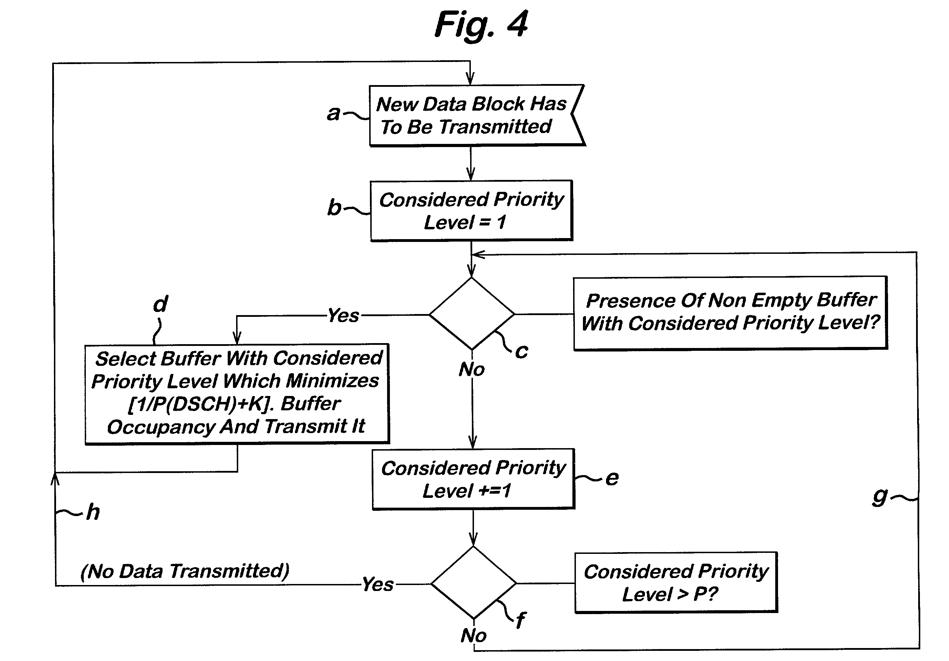

One possible scheduling algorithm is shown in Figure 4.The buffers (not shown) at the base station each have an allocated priority level dependent on their associated user terminal (level 1 is highest priority). When a data block is (a) queued in a buffer (not shown) for transmission, (b) priority level 1 is selected first to determine (c) whether any of the buffers having a data block for transmission is of that priority level . If yes, (d) the data block is selected for transmission from the buffer of that priority level for which the estimated transmit power P(DSCH) multiplied by the amount of data (e.g.number of data blocks) stored in the buffer is lowest, then a return is made to step (a) If no, (e) the next priority level to be considered is selected as the previously considered priority level plus one (e.g .level 2 follows level 1 and so on). A check (f) is made of whether the current priority level being considered is more than a maximum permitted level P (i.e lowest level of priority). If no, then (g) a return is made to step (c). If yes , i.e. the current level is more than the maximum permitted level then (h) a return is made to step (a), no data being selected for transmission on the downlink shared channel DSCH as none is available and the sequence restarts, a new data block or blocks for transmission being awaited. It will thus be seen that data blocks in buffers to highest priority (priority level 1) users is sent before data in buffers to lower priority (priority level 2,3,..) users. Similarly data to a level 2 user is sent before data to level 3 user (if both are queued), and so on.

An alternative scheduling scheme is shown in Figure 5. The buffers (not shown) at the base station each have an allocated priority level dependent on their associated user terminal (level 1 is highest priority). When a data block is (k) queued in a buffer (not shown) for transmission, a positive answer (m) to the question (l) whether a non-empty buffer is present causes for each buffer i a first factor $W1(i)$ dependent on the priority of the user terminal associated with that buffer to be determined (n). Then (o) a second factor $W2(i)$ dependent on the estimated transmit power to each user terminal is determined. Then (p) a third factor $W3(i)$ dependent upon the fill level of each buffer is determined. The next step is to (q) determine for each buffer i the function $W1(i).W2(i).W3(i)$ and select the data for transmission from that buffer for which this function is least. A return (r) is then made to step (k).

At step (l), if all buffers are empty (s) naturally no data is transmitted on the downlink shared channel DSCH and a return is made to step (k).

## Claims

1. A radio telecommunications network comprising a base station and a plurality of mobile user terminals, the base station in use storing data blocks intended for transmission to respective user terminals, selecting which data block is next for transmission, and transmitting each data block over a channel shared by the user terminals to the respective user terminal **characterised in that** the selection is made dependent upon estimates of the required transmit power to the respective user terminals.

2. A radio telecommunications network according to claim 1, in which each estimate depends upon the transmit power to the associated user terminal over an associated dedicated channel.

3. A radio telecommunications network according to claim 2, in which the lower the estimate of required transmit power is the more likely is data to that user terminal to be selected.

4. A radio telecommunications network according to any preceding claim, in which the selection is made also dependent upon the amount of data stored for transmission to the respective user terminal.

5. A radio telecommunications network according to any preceding claim, in which the user terminals each have a selected one of a plurality of different priority levels, and the selection is made also dependent upon the level of priority accorded to the respective user terminal.

6. A radio telecommunications network according to any preceding claim, being a Universal Mobile Telecommunications System UMTS telecommunications network, the base station comprising a base transceiver station and radio network controller RNC, the radio network controller controlling the base transceiver station.

7. A radio telecommunications network according to claim 6, in which the channel shared by the user channels is a downlink shared channel DSCH.

8. A radio telecommunications network according to claim 6 or claim 7, in which the base transceiver station is operative to send information to the radio network controller in a field of a dataframe, the information comprising an indication of transmit power level to the associated user terminal over an associated dedicated channel, the field being dedicated to that information.

9. A method of transmitting data blocks in radio telecommunications network comprising a base station and a plurality of mobile user terminals, the base station storing data blocks intended for transmission to respective user terminals, selecting which data block is next for transmission, and transmitting each data block over a channel shared by the user terminals to the respective user terminal **characterised by** the selection being made dependent upon estimates of the required transmit power to the respective user terminal.

**10.** A radio telecommunications base station operative in use to communicate with a plurality of mobile user terminals, the base station in use storing data blocks intended for transmission to respective user terminals, selecting which data block is next for transmission, and transmitting each data block over a channel shared by the user terminals to the respective user terminal **characterised in that** the selection is made dependent upon estimates of the required transmit power to the respective user terminals.

## Fig. 1 PRIOR ART

New Data Block Has To Be Transmitted

Considered Priority Level = 1

Presence Of Non Empty Buffer With Considered Priority Level?

Yes → Select Buffer With Considered Priority Level Which Is Most Full And Transmit It

No

Considered Priority Level += 1

Considered Priority Level > P?

Yes → (No Data Transmitted)

No

EP 1 357 767 A1

## Fig. 2

RNC              BTS

Radio Network Controller      Base Station (Node_B)

User Terminal

UE

UTRAN

## Fig. 5

$k$ — New Data Block Has To Be Transmitted

(No Data Transmitted)    **No**    Presence Of Non Empty Buffer?

$s$         $l$

$m$  **Yes**

Calculate For Each Buffer i
$W1(i) = f(\text{Priority Of Buffer } i)$   $n$

Calculate For Each Buffer i
$W2(i) = f(\text{DSCH Transmit Power For Buffer } i)$   $o$

$r$

Calculate For Each Buffer i
$W3(i) = f(\text{Occupancy Of Buffer } i)$   $p$

Select Buffer Which Minimizes
$W1(i).W2(i).W3(i)$
And Use It For Transmission   $q$

**Fig. 3**

| 7 | | 0 |
|---|---|---|

**Header**
| Header CRC | FT |
|---|---|

| CFN |
|---|

| Spare | FI Of First DCH |
|---|---|

| Spare | TFI Of Last DCH |
|---|---|

**Payload**

| First TB Of First DCH |
|---|

| First TB Of First DCH (cont.) | Pad |
|---|---|

| Last TB Of First DCH |
|---|

| Last TB Of First DCH (cont.) | Pad |
|---|---|

| First TB Of Last DCH |
|---|

| First TB Of Last DCH (cont.) | Pad |
|---|---|

| Last TB Of Last DCH |
|---|

| Last TB Of Last DCH (cont.) | Pad |
|---|---|

CRCI Of First TB Of First DCH    QE

| | | | | | | | |
|---|---|---|---|---|---|---|---|

CRCI Of Last TB Of Last DCH

| | | | | | Pad |
|---|---|---|---|---|---|

| DL Transmit Power Level Over Last TTI |
|---|

**Optional**
| Spare Extension |
|---|

| Payload Checksum |
|---|

| Payload Checksum (cont.) |
|---|

# Fig. 4

a — New Data Block Has To Be Transmitted

b — Considered Priority Level = 1

c — Presence Of Non Empty Buffer With Considered Priority Level?

d — Select Buffer With Considered Priority Level Which Minimizes [1/P(DSCH)+K]. Buffer Occupancy And Transmit It  — Yes

No

e — Considered Priority Level += 1

f — Considered Priority Level > P?

Yes — (No Data Transmitted)

No

g

h

EP 1 357 767 A1

## EUROPEAN SEARCH REPORT

**European Patent Office**

**Application Number**

EP 02 25 2829

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 33349 A (ERICSSON TELEFON AB L M) 30 July 1998 (1998-07-30) <br> * abstract * <br> * page 1, line 3 - line 11 * <br> * page 3, line 3 - line 23 * <br> * page 5, line 19 - page 6, line 28 * <br> * page 8, line 16 - page 9, line 20 * <br> * page 11, line 5 - line 13 * <br> * page 13, line 22 - line 27 * <br> * page 23, line 6 - line 10 * <br> * page 29, line 4 - page 30, line 16 * <br> * claims 1,8,9,24 * | 1-10 | H04Q7/38 |
| A | "3rd Generation Partnership Project;Technical Specification Group Radio Access Network; Radio Interface Protocol Architecture (3G TS 25.301 version 3.3.0)" <br> 3RD GENERATION PARTNERSHIP PROJECT;TECHNICAL SPECIFICATION GROUP RADIO ACCESS NETWORK; RADIO INTERFACE PROTOCOL ARCHITECTURE (3G TS 25.301 VERSION 3.3.0), XX, XX, <br> December 1999 (1999-12), XP002164238 <br> * page 13, line 27 - line 28 * <br> * page 33, line 7 - page 34, line 39 * | 6,7 | **TECHNICAL FIELDS SEARCHED (Int.Cl.7)** <br> H04Q <br> H04L |

The present search report has been drawn up for all claims

| Place of search | Date of completion of the search | Examiner |
|---|---|---|
| BERLIN | 20 December 2002 | Alonso Maleta, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 1 357 767 A1**

## ANNEX TO THE EUROPEAN SEARCH REPORT
## ON EUROPEAN PATENT APPLICATION NO.

EP 02 25 2829

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2002

| Patent document cited in search report | | Publication date | Patent family member(s) | | Publication date |
|---|---|---|---|---|---|
| WO 9833349 | A | 30-07-1998 | SE | 514781 C2 | 23-04-2001 |
| | | | AU | 5785298 A | 18-08-1998 |
| | | | BR | 9806972 A | 14-03-2000 |
| | | | CN | 1269112 T | 04-10-2000 |
| | | | EP | 1013124 A1 | 28-06-2000 |
| | | | JP | 2001508966 T | 03-07-2001 |
| | | | SE | 9700246 A | 29-07-1998 |
| | | | WO | 9833349 A1 | 30-07-1998 |
| | | | US | 6449484 B1 | 10-09-2002 |

EPO FORM P0459

For more details about this annex : see Official Journal of the European Patent Office, No. 12/82

11